# EUROPÄISCHE PATENTANMELDUNG

(11) **EP 0 936 821 A1**
(43) Veröffentlichungstag der Anmeldung: **18.08.1999**
(21) Anmeldenummer: 98102538.0
(22) Anmeldetag: 13.02.1998
(51) Int. Cl.: H04Q 3/00

(54) **Steuerkomponente in einem Service Switching Point**

(71) Anmelder: SIEMENS AKTIENGESELLSCHAFT, 80333 München (DE)
(72) Erfinder: Eckinger, Mathilde, 81379 München (DE); Gneiting, Dieter, Dipl.-Math., 81375 München (DE); Kraft, Stefan, Dipl.-Ing., 81479 München (DE); Markert, Matthias, Dipl.-Ing., 81477 München (DE)

(57) **Zusammenfassung**

Der Erfindung liegt die Aufgabe zugrunde, Features auch für IN-Dienste mithilfe von bearer unrelated Verbindungen zu ermöglichen. Diese Aufgabe wird durch eine Steuerkomponente in einem Service Switching Point gelöst, die eine featureunabhängige Kopplung der genannten bearer unrelated Verbindungen zwischen den Feature-Programmen durchführt.

## Beschreibung

Die heutigen öffentlichen Telekommunikationsnetze stellen nicht mehr nur nach der herkömmlichen Art und Weise eine physikalische oder logische Verbindung zwischen zwei Teilnehmern her, um darüber Information zu übertragen (Sprache im Telefonnetz; Texte, Daten, Bilder im ISDN oder in einem Datennetz). Vielmehr sollen sie auch dem Benutzer einen technikkonformen Komfort anbieten, der ihm eine bequeme und flexible Telekommunikation erlaubt. Dies geschieht heute auf drei verschiedene Arten :
- lokal im Endgerät des rufenden oder gerufenen Teilnehmers (z. B. Namenstasten, Rufnummernanzeige)
- in der Ortsvermittlungsstelle des rufenden oder gerufenen Teilnehmers (z. B. Kurzwahl, Call Completion Features)
- zentral im Netz über den Zugang zu einem Intelligenten Netz IN durch Informationsaustausch mit einem Service Control Point SCP

Im letzteren Fall ist es immer erforderlich, eine Verbindung zu einem Übergangsknoten - dem Service Switching Point SSP - aufzubauen. Die Information wird ihrerseits von einem Diensteteilnehmer oder Diensteanbieter in eine Datenbank im SCP eingebracht und kann so pro Nutzverbindung abgefragt werden. Beispiele für solche Dienste sind :
- Televoting Service TVS zur Meinungsumfrage
- Account Card Calling ACC zur zentralen Erfassung von Gebühren
- Virtual Private Network VPN und Area Wide Centrex AWC zur Bildung von privaten Netzen innerhalb des öffentlichen Netzes (Geo-Centrex)
- Freephone FPH zur Gebührenübernahme durch den B-Teilnehmer

Der Dienstteilnehmer hat hierbei die Möglichkeit, durch eigene Kontrollprogramme die Verbindungen zu beeinflussen (z. B. Weiterleiten zu einem anderen Anschluß) und für seine Analysen Daten zu erfassen (z. B. Verkehrsmengen, Ursprungsverteilung).

Der Informationsaustausch zum Intelligenten Netz setzt immer voraus, daß eine Nutzkanalverbindung zwischen rufendem Teilnehmer und SSP existiert, die dann in einen Haltezustand übergeführt wird, solange der Informationstransfer mit dem SCP abläuft.

Mit Einführung von komplexen Teilnehmer-Features im öffentlichen Telekommunikationsnetz ist neben den nutzkanalbezogenen Verbindungen ein zweiter Typ - die nutzkanalunabhängige oder bearer unrelated Verbindung - entstanden. Bei dieser Verbindung handelt es sich um eine virtuelle Verbindung zwischen zwei Teilnehmern, d. h. eine reine Signalisierungsverbindung, über die nur Steuerungsinformation (mit geringen Datenraten) ausgetauscht wird (z. B. zur Überwachung eines Teilnehmers auf Freiwerden). Um die Signalisierungsverbindung zwischen den beiden Teilnehmern herzustellen wird der Mechanismus des Signalling Connection Control Part SCCP benutzt.

Die Anwendung von bearer unrelated Verbindungen im Zusammenhang mit Diensten, die den Zugang zum IN benötigen, ist bisher ausgeschlossen bzw. nur mit Einschränkungen möglich, da keine universelle Methode existiert, diese nutzkanalunabhängigen Verbindungen in einen Zustand zu bringen, der dem Haltezustand bei nutzkanalbezogenen Verbindungen vergleichbar ist und es erlaubt, Information in das und aus dem Intelligenten Netz zu übertragen, um z. B. das endgültige Ziel der bearer unrelated Verbindung zu bestimmen. Da bei bearer unrelated Verbindungen die entsprechende Resource - nämlich die physikalische Verbindung bei bearer related Verbindungen - nicht vorhanden ist und es deshalb für virtuelle Verbindungen keine (Haltezustands-)Aufzeichungen auf Vermittlungsebene gibt, muß für diese Verbindungen ein entsprechender Zustand nachgebildet werden.

Im folgenden werden zwei (Lösungs-)Ansätze diskutiert, um das erwähnte Problem (die Anwendung von bearer unrelated Verbindungen im Zusammenhang mit Features für Dienste, die den Zugang zum IN benötigen) zu lösen.

Der erste Ansatz besteht darin, einen Abfragezyklus (Information Request / Information Transfer) zwischen dem Amt des rufenden Teilnehmers (Origination Line Exchange OLE) und dem Service Control Point durchzuführen. Dies macht es erforderlich, daß
1.die OLE erkennt, daß ein IN-Zugang erforderlich ist
2.die OLE die Kenntnis besitzt, welcher SCP für ein bestimmtes Feature zuständig ist

Diese Lösung ist daher nur eingeschränkt verwendbar, insbesondere erlaubt sie im allgemeinen Fall keinen Übergang zwischen verschiedenen Kommunikationsnetzen, da ein weltweit abgestimmter Informationsabgleich zwischen allen Vermittlungsstellen von allen Netzbetreibern nicht praktikabel ist.

Der zweite Ansatz besteht darin, den Haltezustand für ein bestimmtes Feature direkt im Service Switching Point SSP zu simulieren, der sich an einer beliebigen Stelle im Netz befinden kann und in dem für jedes Feature das entsprechende Featureprogramm, d. h. die application service entity ASE, in jedem SSP vorhanden ist. Die ASE setzt, da sie auf ein bestimmtes Teilnehmer-Feature bezogen ist, auch das Vorhandensein von entsprechenden Teilnehmer-Resourcen voraus. Dies hat zur Konsequenz, daß
1.diese Teilnehmer-Resourcen (zumindest 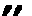 virtuelle Teilnehmer-Resourcen" ) in jedem SSP vorhanden sein müssen, auch wenn es sich um ein reines Transitamt handelt, an dem keine Teilnehmer angeschlossen sind
2.diese Resourcen in ausreichender Zahl vorhanden sein müssen, um Lastspitzen durch Verkehrskonzentration und Ausfall von Resourcen abfangen zu können
3.mit jedem im Netz neu eingeführten Feature die entsprechende ASE in einer SSP-Umgebung zum Ablauf gebracht werden muß
4.mit jeder Änderung eines Features auch die entsprechende ASE im SSP angepaßt werden muß

Eine Lösung entsprechend dieses Ansatzes ist daher nur unter diesen genannten Einschränkungen möglich.

Der Erfindung liegt die Aufgabe zugrunde, Features auch für IN-Dienste mithilfe von bearer unrelated Verbindungen zu ermöglichen, und zwar ohne die Nachteile der genannten Lösungsansätze.

Diese Aufgabe wird durch ein featureneutrales Steuerprogramm nach Anspruch 1 gelöst.

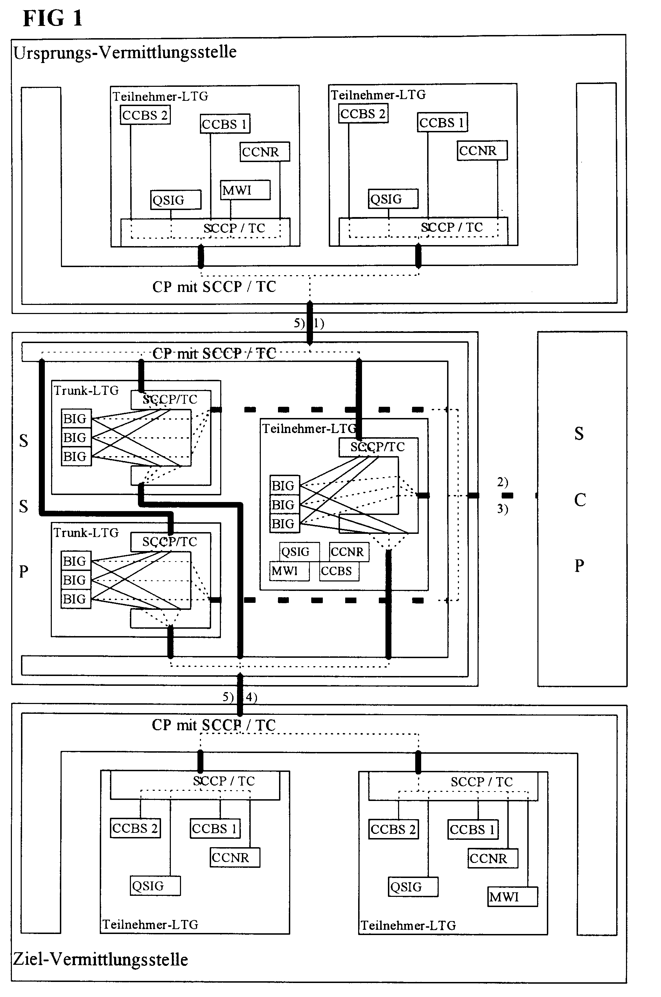

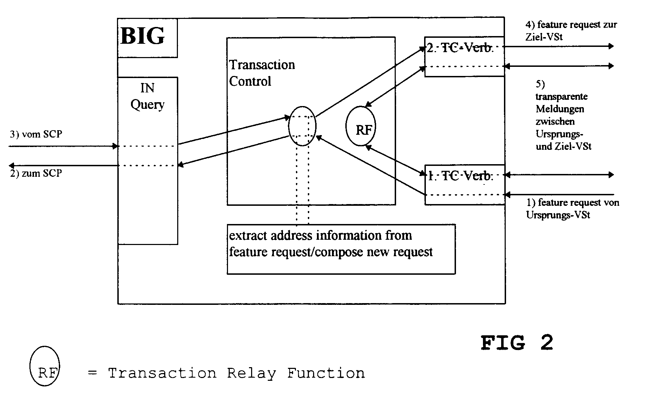

Im folgenden wird ein Ausführungsbeispiel der Erfindung anhand der Zeichnung näher erläutert, wobei die Zeichnung die Figuren 1 und 2 umfaßt.
FIG 1 zeigt das IN-Interworking für Bearer Unrelated Verbindungen im Netz.
FIG 2 zeigt den dynamischen Ablauf im erfindungsgemäßen Steuerprogramm.

Die Erfindung wird durch ein Steuerprogramm (im folgenden auch als *B*earer unrelated *I*N access - *G*eneric oder abgekürzt *BIG* bezeichnet) realisiert, mit dem der IN-Zugang für bearer unrelated Verbindungen ohne die Nachteile der genannten Lösungsansätze durchgeführt werden kann.

Das Steuerprogramm (Steuerkomponente BIG), das im SSP installiert ist, benötigt keine Kenntnis über die Eigenschaften und die Abläufe der einzelnen Teilnehmer-Features, sondern lediglich die Information, die für den Abfragezyklus 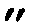 Information Request / Information Transfer" zwischen SSP und SCP benötigt werden. Im wesentlichen sind dies die Informationen, um den rufenden und den gerufenen Teilnehmer zu identifizieren und dem SCP zu ermöglichen, diese Information zu bearbeiten. Die Informationsmenge ist damit durch die Schnittstelle zwischen SSP und SCP bestimmt und nicht wie bei heutigen Lösungen durch das Feature selbst. Damit kann das generische Steuerprogramm unabhängig vom Netz und von der Vermittlungsstelle des rufenden Teilnehmers an jedem Übergangspunkt (d.h. Vermittlungsknoten mit SSP-Funktionalität) zum IN eingesetzt werden.

Durch das BIG für bearer unrelated Verbindungen erzielte Vorteile sind darin zu sehen, daß
1.der (Abfrage-) Zyklus 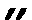 Information Request / Information Transfer" wie bei nutzkanalbezogenen Verbindungen vom SSP aus gestartet wird; i. a. wird dies derselbe SSP sein, der auch für nutzkanalbezogene Verbindungen benutzt wird
2.das BIG wegen seiner Featureneutralität keine Teilnehmer-Resourcen benötigt, sondern lediglich die Transportmechanismen im öffentlichen Telekommunikationsnetz auf Basis des SCCP sowie zu IN über den IN Application Part INAP verwendet
3.das BIG auch mit den Resourcen arbeiten kann, die in einem Transitamt sowieso für Trunks vorhanden sind; da es nicht wie das Teilnehmerfeature selbst auf eine entsprechende Hardware- oder Software-Umgebung angewiesen ist, kann es flexibel auch in jeder Transitvermittlungsstelle (die diese Umgebung i. a. nicht zur Verfügung stellt), eingesetzt werden
4.das BIG in beliebiger Anzahl und Inkarnation im SSP vorhanden sein kann
5.ein zentrales Koordinationsprogramm die Ansteuerung der verschiedenen dezentralen Steuerprogramme für den IN-Zugang je nach Last und Ausfällen vornehmen kann.

In FIG 1 ist der Einsatz des Steuerprogramms BIG in einer Konfiguration dreier Vermittlungsstellen des SIEMENS Vermittlungssystems EWSD beispielhaft dargestellt; in Ursprungs- bzw. Zielvermittlungsstelle laufen die Bearer Unrelated Feature Programme; im SSP wird der Zugang zum IN durchgeführt.
Anmerkungen:
1.Die Feature Programme sind in Teilnehmer-Line Trunk Groups (LTG) in der Ursprungs- und Zielvermittlungsstelle realisiert; sie benötigen eine spezielle Software- und Hardware-Umgebung. Die Netzsignalisierung wird per SCCP/TC (TC = Transaction Capability) abgewickelt.
2.Im SSP ist das generische Steuerprogramm 'Bearer Unrelated IN Interworking - Generic' (BIG) realisiert; es bestehen keine besonderen Anforderungen an die Software- bzw. Hardware-Umgebung d.h. es kann in jeder beliebigen LTG liegen (siehe Verteilung der BIG-Funktion in den verschiedenen Blöcken des SSP). Das Programm BIG ermöglicht für alle verschiedenen Feature Programme den IN Zugang; es stützt sich hierbei auf eine für alle Feature identisch standardisierte Schnittstelle auf Basis des INAP zwischen SSP und SCP ab. Die Netzsignaliserung zu den Feature Programmen und zum SCP erfolgt über SCCP/TC.
3.Da das BIG den IN Zugang für alle Features durchführen kann, kann eine Lastverteilung auf die im SSP vorhandene Hardware durchgeführt werden. Diese Lastverteilung wird bei EWSD vom Coordination Processor CP gesteuert. Eine eventuell im SSP vorhandene Teilnehmer-LTG kann zwar für BIG mitbenutzt werden, ist aber nicht Voraussetzung, da in den meisten Netzen nicht von deren Existenz ausgegangen werden kann. Auf Grund der langen Lebensdauer der Bearer Unrelated Features ist diese flexible Lastverteilung eine Voraussetzung für eine kostengünstige Realisierung des IN Zugangs, da keine spezielle Zusatzhardware benötigt wird und die Last auf alle vorhandenen Peripherie-Prozessoren gleichmäßig verteilt werden kann.
4.Der Zugang zum IN ist standardisiert, eine einheitliche Schnittstelle zwischen SSP und SCP ist definiert. Damit ist es sehr vorteilhaft, diese einheitliche Schnittstelle in dem generischen Programm BIG zu realisieren, anstatt all diese Features durch entsprechende Feature Programme im SSP zu realisieren und all diese Feature Programme mit dieser Schnittstelle zu versehen. Damit ergibt sich eine effektive Möglichkeit, den Bearer Unrelated IN Zugang allen Feature Programmen zur Verfügung zu stellen, ohne in die Funktion der Feature selbst eingreifen zu müssen.
5.Es werden drei SCCP/TC Transaktionen unterschieden:
   a) Ursprungs-Vermittlungsstelle - SSP
   b) SSP - Zielvermittlungsstelle
   c) SSP - SCP
   Das Programm BIG koppelt diese drei (Kommunikations-)Transaktionen (virtuelle Verbindungen) im SSP (siehe FIG 2). Zwei Arten der Kopplung können dabei unterschieden werden:
   I) Die Transaktion zwischen SSP und SCP wird während der gesamten Lebenszeit aufrecht erhalten, d. h. die gesamte (Netz-)Signalisierung zwischen den Feature-Programmen läuft immer über den SSP und die dortige BIG-Funktion; die drei (virtuellen) Verbindungen a), b) und c) werden in diesem Fall tatsächlich aufgebaut und bleiben erhalten (zur Verdeutlichung siehe Fig. 2) ; der SCP hat damit die Möglichkeit, den Ablauf des Feature Programms zu überwachen.
   II) Nach der Rufnummernumwertung durch den SCP wird die Verbindung SSP - SCP abgebaut und die Verbindung weiter zur Zielvermittlungsstelle transferiert; es wird keine weitere Netzsignalisierung über den SSP, genauer gesagt über die SSP-Funktion in der VST, geführt; das Programm BIG stellt eine direkte Kommunikation, d.h. eine ausschließlich über das Signalisierungssystem ablaufende Kommunikation, zwischen Ursprungs- und Zielvermittlungsstelle her und verabschiedet sich aus der Verbindung, d.h. es bleibt nur eine Transaktion übrig. Welche der beiden obengenannten Kopplungsarten angewendet werden soll, kann vom SCP gesteuert werden; der SCP muß entscheiden, ob ein weiterer Informationstransfer zwischen SSP und SCP nötig ist oder nicht.
   Beide Lösungen werden innerhalb des Programms BIG realisiert und allen Feature Programmen zur Verfügung gestellt.
6.Die SSP-Funktion kann in jeder beliebigen Vermittlungsstelle des öffentlichen Netzes lokalisiert sein; befindet sie sich bereits in der Ortsvermittlungsstelle des rufenden Teilnehmer, so kann das Feature Programm und das Steuerprogramm BIG in der selben LTG ablaufen und es ergeben sich (im Beispiel des EWSD) damit dynamische Vorteile.

### Legende zu den Figuren:

- BIG:: Bearer Unrelated IN Interworking - Generic
- CCBS:: Completion of Calls to Busy Subscriber (Automatischer Rückruf bei Besetzt)
- CCNR:: Completion of Calls on No Reply (Automatischer Rückruf bei Nicht Melden)
- EWSD:: Elektronisches Wählsystem Digital (Öffentliche Vermittlungsstelle der Siemens AG)
- MWI:: Message Waiting Indication
- QSIG:: Q-Signalisierung: Signalisierungs-Protokoll zwischen Nebenstellenanlagen
- CP:: Coordination Processor, Zentraler Prozessor im EWSD
- LTG:: Line Trunk Group, Peripherer Prozessor
- SSP:: Service Switching Point
- SCP:: Service Control Point
1): feature request von Ursprungs-VST
2): information request an SCP
3): information transfer vom SCP
4): feature request an Ziel-VST
5): transparente Meldungen zwischen Ursprungs- und Ziel-VSt

### Weitere im Text verwendete Abkürzungen :

- ACC:: Account Card Calling
- ASE:: Application Service Entity
- AWC:: Area Wide Centrex
- FPH:: Freephone
- IN:: Intelligentes Netz
- INAP:: IN Application Part (Schnittstelle zu IN)
- ISDN:: Integrated Services Digital Network
- OLE:: Originating Line Exchange
- SCCP:: Signalling Connection Control Part
- TC:: Transaction Capability
- TVS:: Televoting Service
- VPN:: Virtual Private Network
- VST:: Vermittlungsstelle

## Patentansprüche

1. Steuerkomponente in einem Service Switching Point, die eine nutzkanalunabhängige Kommunikation zwischen Feature-Programmen zur Durchführung von Features für IN-Dienste unterstützt, indem sie die genannte Kommunikation mithilfe des Intelligenten Netzes (IN) koppelt, wobei sie die genannte Kopplung featureunabhängig durchführt.

2. Steuerkomponente nach Anspruch 1
**dadurch gekennzeichnet, daß**
die Steuerkomponente eine standardisierte Schnittstelle auf Basis des INAP zu dem IN aufweist.

3. Steuerkomponente nach Anspruch 1 oder 2,
**dadurch gekennzeichnet, daß**
die Steuerkomponente eine Schnittstelle zu Feature-Programmen aufweist, die einem von einem Ursprungs-Feature-Programm stammenden Feature-Request die für den Information-Request an den SCP benötigte Information entnimmt und anhand der Antwortinformation vom SCP einen neuen Feature-Request an das Ziel-Feature-Programm erzeugt.

4. Zentraler Steuerungsrechner einer Vermittlungsstelle, wobei die Vermittlungsstelle einen Service Switching Point mit mindestens zwei Steuerkomponenten (BIG) nach einem der Ansprüche 1 bis 3 beinhaltet, mit
einem Koordinationsprogramm, das die Feature-Requests der Feature-Programme auf die Steuerkomponenten (BIG) in der Vermittlungsstelle verteilt.
